# FASCICULE DE BREVET EUROPEEN

(11) **EP 0 904 909 B1**
(45) Date de publication et mention de la délivrance du brevet: **23.04.2003**
(21) Numéro de dépôt: 97870137.3
(22) Date de dépôt: 17.09.1997
(51) Int. Cl.: B29B 17/00, B30B 9/04, B30B 9/30

(54) **Procédé et dispositif de transformation de matières essentiellement thermoplastiques, en particulier de rebuts sous forme de films ou de feuilles**
Verfahren und Vorrichtung zum Umwandeln von im wesentlichen thermoplastischen Kunststoffen, insbesondere Film- oder Folienabfällen
Method and device for conversion of mainly thermoplastic materials, especially scrap films or foils

(43) Date de publication de la demande: 31.03.1999
(73) Titulaire: Vieslet, Eric, 4000 Liege (BE)
(72) Inventeur: Vieslet, Eric, 4000 Liege (BE)
(74) Mandataire: Van Malderen, Michel

(56) Documents cités:
- DE-A- 4 336 967
- DE-B- 1 247 002
- NL-A- 9 300 653
- PATENT ABSTRACTS OF JAPAN vol. 13, no. 477 (M-885), 27 octobre 1989 & JP 01 188310 A (MORUTON K.K.), 27 juillet 1989, & DATABASE WPI Section Ch, Week 8936 Derwent Publications Ltd., London, GB; Class A, AN 89-259663 (36) & JP 01 188 310 A (MORUTON K.K.) , 27 juillet 1989
- PATENT ABSTRACTS OF JAPAN vol. 13, no. 405 (M-868), 7 septembre 1989 & JP 01 146708 A (SANKO SEISAKUSHO K.K.), 8 juin 1989, & DATABASE WPI Section Ch, Week 8929 Derwent Publications Ltd., London, GB; Class A, AN 89-209958 (25) & JP 01 146 708 A (SANKO SEISAKUSHO K.K.) , 8 juin 1989

## Description

### Objet de l'invention

La présente invention porte sur un procédé de transformation de matières essentiellement thermoplastiques, en particulier de telles matières thermoplastiques se présentant sous forme de films ou de feuilles au sens large, provenant de matières de rebut, c'est-à-dire des produits tels que des coupes de moquettes (qualifiées en Belgique de tapis plain), des emballages, éventuellement des emballages comportant plusieurs couches de matériaux plastiques différents tels que le polyéthylène, le polypropylène, le polychlorure de vinyle, les polyesters et les polyamides.

L'invention concerne également un dispositif adapté à la mise en oeuvre du procédé.

### Arrière-plan technologique

On a déjà proposé, notamment dans le document WO 94/21435 A une technique de récupération de déchets de plastique par laquelle ces déchets sont comprimés dans une chambre de compression à l'aide d'un piston.

Divers moyens sont proposés, notamment pour chauffer et/ou percer le bloc de matière comprimé qui est ensuite extrait de la presse et calibré par sciage des faces ou sciage du bloc en tranches transversales.

Les blocs obtenus ont des dimensions de l'ordre de 1,20 x 0,80 x 0,33 m.

Les blocs de ce type trouvent leur principale application en génie civil, en particulier dans les travaux de terrassement, d'allégement des sols, d'isolation de drainage, de protection sismique, de protection souterraine en mine et galeries de protection contre les éboulements en surface, de panneaux acoustiques, de bardage, d'ouvrage mobile de génie civil, ponts, passages routiers sur marécages.

On indique que ce produit présente dès propriétés de continuité de souplesse, de déformabilité et de résistance à la traction.

Il est important de noter que le procédé décrit dans ce document, utilise des matières premières récoltées et/ou préconditionnées selon des normes connues, qui sont acheminées dans une enceinte où elles peuvent éventuellement être portées à une température élevée, transformant ainsi leurs caractéristiques rhéologiques.

Ces matières premières, mises à température adéquate en fonction de leur utilisation finale, sont dirigées vers une ou plusieurs chambres de pesage, d'homogénéisation, de préformage, de densification et/ou de précompression.

Ces matières prétransformées sont introduites ensuite dans l'une des chambres d'alimentation de pressage principale où elles sont alors comprimées sous une pression réglable entre 10⁶ et 2x10⁶ Pa, en fonction du produit de départ et de l'utilisation finale désirée, de manière à obtenir une densité et/ou un volume parfaitement contrôlés.

Le procédé ne nécessiterait pas ou peu de nettoyage et séchage de la matière première et il peut utiliser des matières relativement humides.

Il est connu que la résistance de la déchirure des tranches de blocs que l'on scie à l'épaisseur souhaitée est très élevée car une nappe de matière, sous l'effet de la sollicitation, s'oriente dans la direction de l'effort. Le fluage dû aux contraintes mécaniques est réduit grâce à la présence de liaisons rigides qui répartissent les sollicitations ponctuelles sur un champ étendu.

Ce procédé et le dispositif qu'il décrit constituent effectivement une solution écologique au moins partielle au coûteux problème du tri et du recyclage mais seulement de certains types de plastique pouvant être compressés et transformés en blocs.

Dans le document US-A-4413969, on propose de recycler dans la production des déchets provenant notamment de la découpe de lisières de feuilles plastiques à l'aide d'un dispositif comportant un piston agissant sur une chambre de compression qui communique avec une filière. A chaque retrait du piston, un élément de restriction maintient la matière comprimée et ainsi que l'indique la colonne 3, lignes 51 à 65, on réalise une fusion complète de la matière avant son extrusion dans la filière. La matière est, après refroidissement, découpée en copeaux ou déchiquetée en vue du recyclage dans la production même dont proviennent les déchets.

Les produits sortant de la filière ont donc été totalement fondus et cette technique n'est pas applicable pour former des blocs réutilisables à d'autres usages.

Le document NL 90 00653 A décrit un procédé et un dispositif de préparation de déchets de matières plastiques et qui sont destinés soit à la destruction par combustion, soit à la mise en décharge.

Le but est de comprimer la. matière et de créer une enveloppe extérieure assurant la cohérence de celle-ci. Il comporte un piston qui injecte la matière dans un organe tubulaire. Le dispositif peut être pourvu de moyens servant à chauffer le dispositif tubulaire. Une trémie surmonte l'élément tubulaire pour l'alimentation des matières.

Il est prévu que le dispositif puisse être pourvu de plusieurs organes à forme tubulaire équipés chacun d'un piston.

Le procédé utilisé est un simple pressage à chaud et la formation de l'enveloppe se produit donc, grâce au chauffage dans l'élément tubulaire.

Le document DE 4 336 967-A vise à réduire le volume et de produire des objets qui soient faciles à manipuler, à savoir à transporter et à stocker. On comprime selon deux axes perpendiculaires dans une chambre, afin de provoquer une fusion superficielle de la matière pressée.

Le document DE 1 247 002-B concerne la formation d'un élément composite profilé au départ d'un mélange de copeaux de bois broyés de produits agricoles et similaires, à l'aide d'un liant constitué par un polymère.

La caractéristique est que des pistons agissent dans deux directions différentes sur le mélange traité.

Les documents Patent Abstracts of Japan vol. 13, n° 405 (M-868), 7 septembre 1989 & JP 01 146708 A (Sanko Seisakusho K.K.), 8 juin 1989 et Patent Abstracts of Japan vol. 13, n° 477 (M-885), 27 octobre 1989 & JP 01 188310 A (Moruton K.K.), 27 juillet 1989 décrivent des compressions de déchets de matières plastiques préalablement ramollies ou fondues dans une chambre.

On connaît également diverses techniques de compression-extrusion appliquées à des matières premières généralement vierges en granules et servant à obtenir des produits moulés de dimensions relativement restreintes.

### Buts de l'invention

Au stade actuel, on ne dispose pas d'un procédé fonctionnant de manière semi-continue qui permette en particulier de traiter efficacement des produits de rebut du type produits de rebut sous forme de films ou de feuilles et l'invention vise donc d'apporter une solution satisfaisante en vue de former des produits convenant pour de nombreux usages, notamment ceux cités di-dessus.

Un but complémentaire de l'invention est d'offrir un procédé qui permette d'adjoindre en faible quantité d'autres produits de rebut sans qu'il soit nécessaire de procéder à un traitement préalable (tels que broyage, lavage, refonte, etc.), notamment pour préparer des granules.

D'autres avantages et caractéristiques de l'invention apparaîtront à la lecture du mémoire descriptif et des revendications.

### Eléments caractéristiques de l'invention

La présente invention porte sur un procédé de transformation de matières essentiellement thermoplastiques, en particulier de produits de rebut, tel que défini dans la revendication 1.

Le procédé s'exécute de préférence comme un procédé semi-continu, en ce sens que tout d'abord sous l'effet du mouvement de poussée du piston, la matière lors de son passage dans le ou les passages à section rétrécie de la chambre, subit une consolidation thermique et une mise en forme avec accroissement de la cohésion au moins sur sa périphérie, du fait que la section rétrécie agit comme une filière. Le piston revient ensuite à la position de départ (c'est-à-dire rétractée) pour permettre l'alimentation des matières à traiter et l'étape de compression reprend.

A la sortie de la chambre et plus précisément à la sortie de la section rétrécie agissant comme filière, le produit se présente sous forme d'un boudin profilé ou d'une bande comportant au moins une croûte de consolidation. Il est immédiatement refroidi rapidement par tout moyen approprié, de préférence à l'aide d'eau et, si l'on souhaite, peut être découpé et en particulier tronçonné.

Il convient de noter que le produit obtenu peut, en section, être de toute forme appropriée, par exemple de forme générale ronde, rectangulaire, hexagonale, etc. avec ou sans découpe(s) selon la fonction que l'on cherche à donner au produit fini obtenu. La forme de la chambre du piston et surtout la filière sera d'un profil approprié à la forme de la section choisie pour le boudin qu'on désire produire.

L'invention concerne également un dispositif pour la mise en oeuvre du procédé, tel que défini der la revendication 5.

Selon une variante d'exécution préférée de l'invention, le piston est guidé sur au moins un axe fixe qui se termine dans le fond de ladite chambre par un noyau chauffé, aligné par rapport à l'axe de manière que la matière traitée subisse un effet de consolidation par accroissement de la cohésion sur sa périphérie externe et intérieurement dans sa masse, en créant un ou des canaux à paroi consolidée dans la matière traitée.

Au moins la zone de la filière comporte des moyens extérieurs assurant un chauffage pour contribuer à la consolidation du produit formé.

Selon une forme d'exécution préférée, le retrécissement de la chambre de compression est obtenu en formant un passage servant de filière en forme de cône tronqué, dont la grande base est tournée vers la zone de compression.

Selon une autre forme d'exécution préférée de l'invention, complémentaire ou non de la précédente, le passage servant de filière comporte un ou plusieurs noyaux chauffés.

Il est également avantageux que l'extrémité du piston mobile qui est en contact avec la matière plastique présente une ou plusieurs concavités de manière à assurer que les matières plastiques sont dirigées préférentiellement vers le ou les passages prévus dans la partie à section réduite, agissant comme une filière.

Avantageusement, on prévoit un ou plusieurs conduits d'alimentation des matières à traiter disposés perpendiculairement à l'axe du piston, étant entendu qu'en position de retrait du piston, ces conduits permettent l'alimentation des matières à traiter dans le corps de la chambre de compression.

On peut donc obtenir en pratique des "boudins ou des profilés" de différentes formes à paroi périphérique consolidée pourvus éventuellement d'un ou plusieurs canaux longitudinaux internes dont la paroi est également consolidée.

De tels canaux contribuent à la rigidification et au maintien en forme de boudin ou profilé et permettent de ménager des conduits ou des cavités convenant notamment pour assurer différentes fonctions (passage de câbles mais également passage assurant le drainage et similaires).

De plus, on réduit ainsi le risque de rupture ou re regonflement de la structure après refroidissement, provoqués par des tensions internes des matières plastiques des matières ainsi traitées.

D'autres détails, avantages et caractéristiques de l'invention apparaîtront à la lecture d'une description qui suit d'une forme d'exécution préférée mais en aucune manière limitative de l'invention, et à la lecture des revendications.

L'invention sera donc décrite plus en détail en référence à ce mode d'exécution préféré de l'invention, illustré dans les dessins annexés d'un dispositif selon l'invention, représenté à titre d'illustration sans caractère limitatif.

Dans cette forme d'exécution préférée, on a prévu que le dispositif permette d'obtenir un produit à paroi extérieure consolidée et également un canal interne également à paroi interne consolidée

D'autres variantes d'exécution sont bien entendu possibles.

### Brève description des dessins

Dans les dessins :

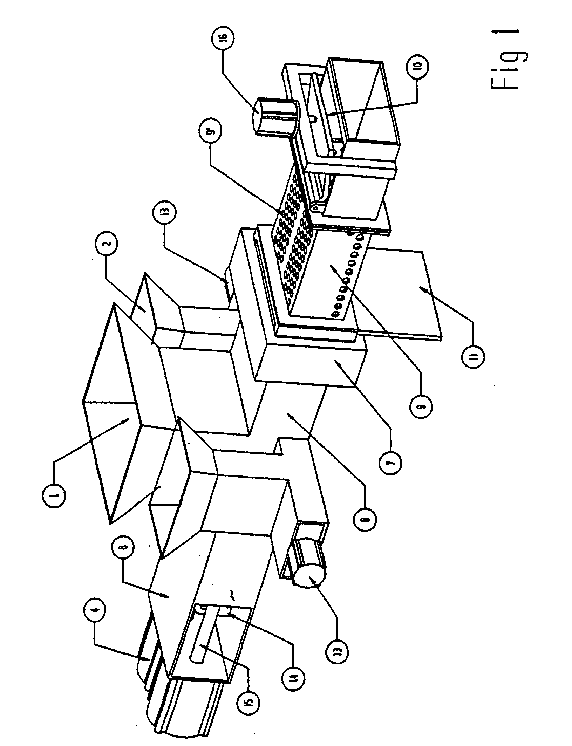

la figure 1 représente une vue en perspective schématique d'une installation;

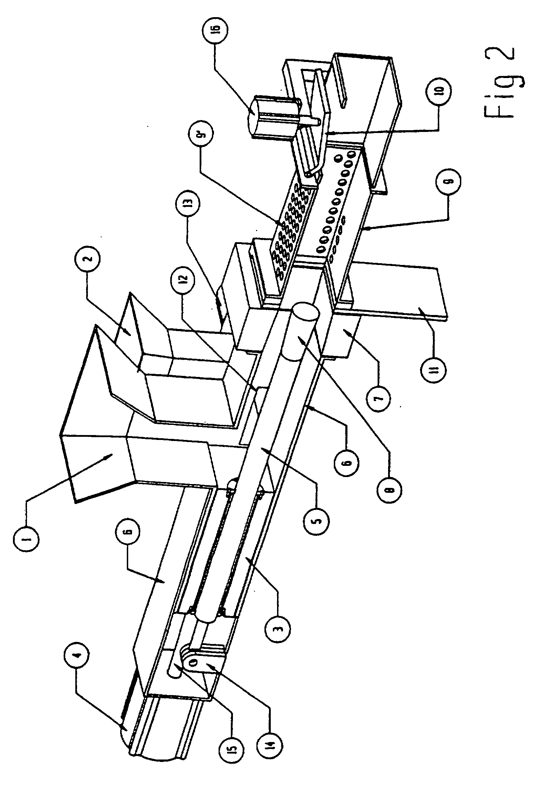

la figure 2 représente une vue schématique partielle en perspective permettant de voir l'intérieur de. l'installation;

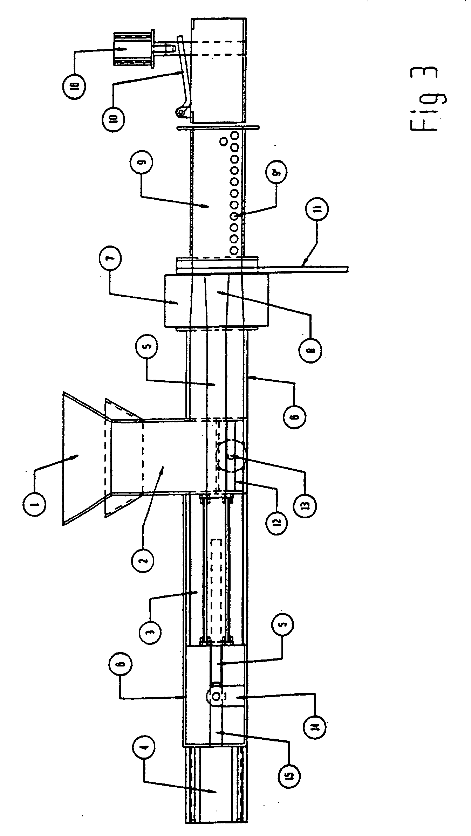

la figure 3 représente une vue de côté de cette installation;
la figure 4 représente une vue par dessus de cette même installation;
la figure 5 représente une vue de l'installation à hauteur de la guillotine disposée à la sortie de la filière de l'installation et;

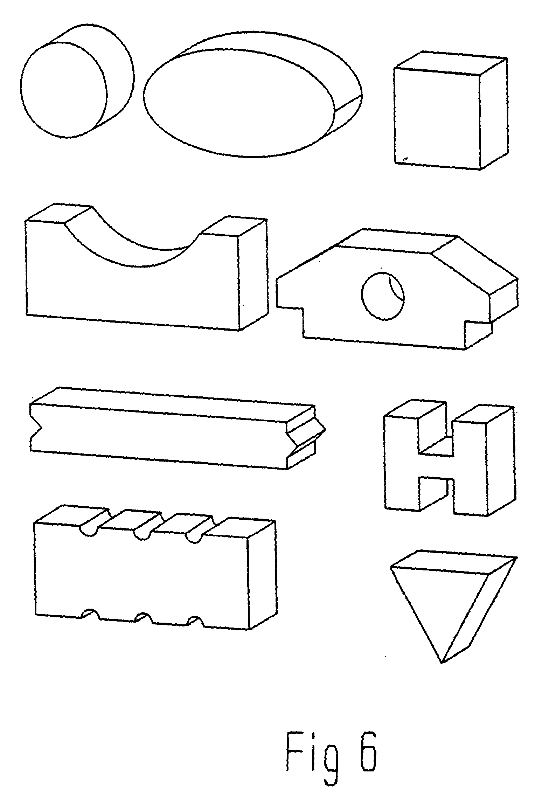

la figure 6 représente la forme de divers profils pouvant être obtenus (tronçons du boudin formé par la filière).

### Description d'un mode d'exécution de l'invention

Dans une installation telle que représentée, l'alimentation de la matière à traiter s'effectue par alimentation, par exemple par gravité par un conduit 1 et latéralement dans le corps de l'installation par deux conduits latéraux 2.

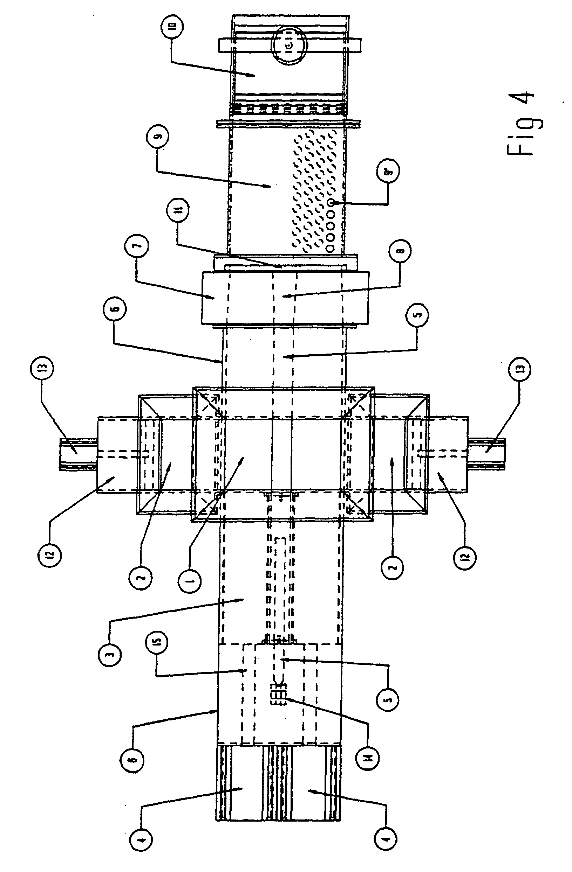

L'installation comporte un corps de piston 3 (représenté en position de retrait), entraîné par un élément de motorisation 4 (par exemple un moteur électrique) agissant sur deux tiges de poussée 15 (voir figure 4).

Un axe fixe 5 en porte-à-faux est disposé dans le fourreau 6.

Une bague ou tout autre moyen convenable permet au piston 3 de coulisser sur cet axe 5 qui est maintenu en position fixe par rapport à l'élément tubulaire par une bequille 14.

A l'extrémité avant de la partie tubulaire, c'est-à-dire en avant du piston 3 tel que représenté, se trouve une chambre de compression délimitée par la partie avant du fourreau 6, constituée par. une première partie qualifiée ci-après de zone de compression et une partie à section rétrécie 7 et qualifiée ci-après de filière.

Dans le cas de la formé d'exécution représentée, la partie formant filière 7 dans laquelle s'effectue le passage forcé de la matière traitée provenant de la chambre de compression est chauffée et elle comporte également un noyau interne 8 chauffé monté sur l'axe fixe 5, sur lequel coulisse le piston 3. Le noyau 8, ainsi que l'indique les figures, a une longueur sensiblement égale à celle de la filière 7. Le noyau 8 en forme de cône tronqué crée ainsi un canal longitudinal dans la matière traitée, dont la paroi interne est ainsi consolidée. Une guillotine 11 est prévue à la sortie de la filière 7 pour fermer la sortie de la filière 7 afin de retenir la matière à traiter lors de la première mise en route (remplissage) de l'installation.

A sa sortie, la matière passe dans une chambre de refroidissement 9 constituée sous forme d'un conduit tubulaire pourvu de perforations 9'. Seulement une partie de ces nombreuses perforations est représentée pour des raisons de clarté des dessins. Elles occupent en pratique les quatres faces de la chambre 9 et des gicleurs (non représentés) alimentent de l'eau de refroidissement (ou tout autre fluide) sur les quatres faces.

La matière circule ensuite entre des éléments de freins 10 assurant de façon classique une fonction de retenue. Une motorisation 16 est prévue à cet effet.

La matière peut, si l'on souhaite, être découpée et notamment tronçonnée par un équipement adéquat (non représenté).

Dans la position rétractée du piston 3 qui est représentée, depuis chacun des conduits 2, un piston latéral 12 permet d'alimenter la matière à traiter grâce à une motorisation de poussée latérale 13, afin d'assurer une distribution régulière de la matière dans la chambre de compression en dessous du niveau du piston 3.

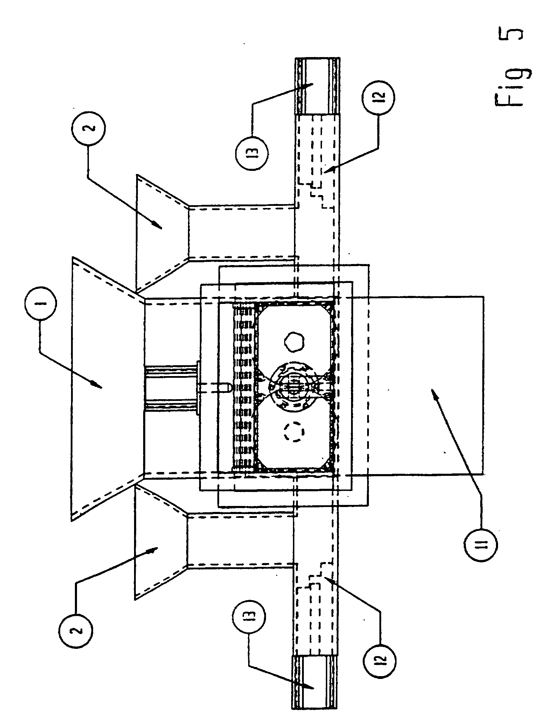

On notera (figure 5) que le piston latéral 12 est en forme d'escalier pour amener de la matière à traiter en dessous du piston 3.

On comprend que le piston 3 pousse d'abord la matière vers la zone de compression délimitée par le fourreau 6 en avant de ce piston, et ensuite comprime celle-ci dans cette zone de compression en la forçant dans. la filière 7.

La matière est automatiquement extraite de l'installation à chaque mouvement va-et-vient du piston 3.

Dans la forme d'exécution préférée, le piston 3 coulisse sur l'axe fixe 5 qui supporte à son extrémité le noyau chauffé 8 qui contribue ainsi à la consolidation par effet thermique de la matière traitée.

D'autres formes d'exécution peuvent bien entendu être envisagées.

Par un choix approprié de la forme de la filière aussi bien que de la forme correspondante du piston et de la chambre de compression, il est possible de réaliser de nombreuses formes de profil.

Les produits obtenus peuvent servir notamment de pose-câbles (en particulier pour des câbles enterrés), d'entrevaux à poser sur des poutrins dans la construction ou de panneaux acoustiques ou de murs anti-bruit par exemple pour les autoroutes etc.

Ils peuvent être débités par sciage et se caractérisent par une densité faible du fait de la fusion seulement partielle, et par un aspect lisse des zones de croûtage extérieures et intérieures qui est conféré par le passage dans la filière.

Le fait que les produits n'ont subi qu'une fusion partielle ou croûtage superficiel (externe et éventuellement interne), leur confère d'excellentes propriétés d'isolation acoustique et thermique.

## Revendications

1. Procédé de transformation de matières essentiellement thermoplastiques, en particulier de produits de rebut, dans lequel on comprime les matières à traiter à l'aide d'un piston (3) dans une chambre de compression équipée, dans son fond, d'un ou plusieurs passages d'une section rétrécie ou filières (7) comportant des moyens extérieurs de chauffage de manière que dans la première partie de la chambre de compression, la matière soit soumise essentiellement à des efforts de compression et que, lors de sa circulation dans le ou les passages à la section rétrécie, elle subisse au moins sur sa périphérie externe, un échauffement destiné à assurer la consolidation du produit formé, sans nécessiter de fusion totale de la matière, et une action de retenue provoquée par des éléments de frein (10).

2. Procédé selon la revendication 1, **caractérisé en ce qu'**il est exécuté en semi-continu, d'abord sous l'effet du mouvement de poussée du piston, la matière lors de son passage dans le ou les passages à section rétrécie de la chambre, subissant une consolidation thermique et une mise en forme avec accroissement de la cohésion au moins sur sa périphérie, dans le passage par la section rétrécie agissant comme une filière, après quoi le piston revient à la position de départ (c'est-à-dire rétractée) pour permettre l'alimentation des matières à traiter et l'étape de compression reprend.

3. Procédé selon la revendication 1 ou 2, **caractérisé en ce que** le produit est obtenu sous forme de boudin et est refroidi rapidement à sa sortie du ou des passages à section rétrécie.

4. Procédé selon la revendication 3, **caractérisé en ce que** le produit après son refroidissement est découpé et en particulier tronçonné.

5. Dispositif pour la mise en oeuvre du procédé selon l'une quelconque des revendications précédentes, constitué par une chambre de compression formée par un fourreau (6) dans lequel se déplace un piston (3), et équipée dans son fond d'un ou plusieurs passages d'une section rétrécie formant une filière (7) comportant des moyens extérieurs de chauffage et pourvue d'éléments de frein (10) assurant une fonction de retenue, la matière étant soumise dans la première partie de la chambre de compression essentiellement à des efforts de compression et lors de sa circulation dans le ou les passages à la section rétrécie, subissant au moins sur sa périphérie externe un échauffement suffisant assurant la consolidation du produit formé, sans nécessiter de fusion totale de la matière.

6. Dispositif selon la revendication 5, **caractérisé en ce que** le piston (3) est guidé sur au moins un axe fixe (5) qui se termine dans le fond de ladite chambre par un noyau chauffé (8), aligné par rapport à l'axe de manière que la matière traitée subisse un effet de consolidation par accroissement de la cohésion sur sa périphérie externe et intérieurement dans sa masse, en créant un ou des canaux à paroi consolidée dans la matière traitée.

7. Dispositif selon la revendication 5 ou 6, **caractérisé en ce qu'**au moins la zone de la filière comporte des moyens extérieurs assurant un chauffage pour contribuer à la consolidation du produit formé.

8. Dispositif selon l'une quelconque des revendications 5 à 7, **caractérisé en ce que** le rétrécissement de la chambre de compression est obtenu en formant un passage servant de filière en forme de cône tronqué, dont la grande base est tournée vers la zone de compression.

9. Dispositif selon l'une quelconque des revendications 5 à 8, **caractérisé en ce que** le passage servant de filière comporte un ou plusieurs noyaux chauffé(s).

10. Dispositif selon l'une quelconque des revendications 5à 9, **caractérisé en ce qu'**il comporte un ou plusieurs conduits d'alimentation (1,2) des matières à traiter disposés perpendiculairement à l'axe du piston (3), permettant l'alimentation des matières à traiter dans le corps de la chambre de compression.

11. Utilisation des produits obtenus par le procédé d'une quelconque des revendications 1 à 4 ou à l'aide de l'installation d'une quelconque des revendications 5 à 10 comme pose-câbles en particulier pour des câbles enterrés, entrevaux à poser sur des poutrins dans la construction, ou panneaux acoustiques, ou murs anti-bruit, en particulier pour les autoroutes.

## Claims

1. Process for transforming essentially thermoplastic material, in particular scrap products, in which the material to be processed is compressed by means of a piston (3) in a compression chamber provided at its bottom with one or several passages with a narrowed section or dies (7) comprising external heating means in such a way that in the first part of the compression chamber, the material is essentially subjected to compression stresses and that, during its circulation in the passage(s) with a narrowed section, it is heated at least at its external periphery in order to ensure the reinforcement of the formed product, without the need for the total fusion of the material, and it is retained by the brake elements (10).

2. Process according to Claim 1, **characterised in that** it is semi-continuously performed, first under the effect of the pressure movement of the piston, when the material passes in the passage(s) of the chamber with a narrowed section, it is subjected to thermal reinforcement and to a forming with an increase in the cohesion at least at its periphery, in the passage with the narrowed section acting as a die, after which the piston comes back to its initial position (i.e. a retracted position) in order to allow the supply of the material to be processed and the compression stage resumes.

3. Process according to Claim 1 or 2, **characterised in that** the product is obtained in the form of a sausage and is rapidly cooled when leaving the passage(s) with a narrowed section.

4. Process according to Claim 3, **characterised in that** the product is sliced up and in particular cut into sections after its cooling.

5. Device for implementing the process according to any one of the preceding claims, constituted by a compression chamber formed by a sleeve (6) in which a piston (3) moves and provided at its bottom with one or several passages with a narrowed section forming a die (7) comprising external heating means and provided with brake elements (10) ensuring a retaining function, the material being essentially subjected to compression forces in the first part of the compression chamber and when circulating in the passage(s) with a narrowed section, being sufficiently heated at least at its external periphery to ensure the reinforcement of the formed product, without the need for the total fusion of the material.

6. Device according to Claim 5, **characterised in that** the piston (3) is guided on at least one fixed axis (5) which ends at the bottom of said chamber by a heated core (8) that is aligned relative to the axis in such a way that the processed material undergoes a reinforcement effect by increase of the cohesion on its external periphery and inwardly in its mass, by creating one or several channels with reinforced walls in the processed material.

7. Device according to Claim 5 or 6, **characterised in that** at least the die zone comprises external heating means for contributing to the reinforcement of the formed product.

8. Device according to any one of Claims 5 to 7, **characterised in that** the narrowing of the compression chamber is obtained by forming a passage acting as a die in the form of a truncated cone, the larger base of which being turned toward the compression zone.

9. Device according to any one of Claims 5 to 8, **characterised in that** the passage acting as a die comprises one or several heated core(s).

10. Device according to any one of Claims 5 to 9, **characterised in that** it comprises one or several supply pipes (1, 2) for the material to be processed arranged perpendicularly to the axis of the piston (3), allowing the supply of the material to be processed in the body of the compression chamber.

11. Use of the products obtained by the process according to any one of Claims 1 to 4, or by means of the installation according to any one of Claims 5 to 10, as cable layer, in particular buried cables, as angle braces to be laid on girders in the construction industry or acoustic panels or soundproof walls, in particular for motorways.

## Patentansprüche

1. Umformverfahren für im wesentlichen thermoplastische Stoffe, insbesondere Abfallprodukte, bei dem die zu verarbeitenden Stoffe durch einen Kolben (3) in einer Druckkammer, die am Ende einen oder mehrere Durchgänge mit verringertem Querschnitt oder Matrizen (7) mit außen angebrachten Heizelementen aufweist, verdichtet werden, so dass das Material im ersten Teil der Druckkammer im wesentlichen einer Druckbeanspruchung ausgesetzt ist und bei seinem Durchlauf durch die Durchgänge mit verringertem Querschnitt wenigstens im peripheren Bereich erhitzt wird - wodurch die Verfestigung des Formprodukts gewährleistet werden soll, ohne dass ein vollständiges Schmelzen des Materials erforderlich wäre - und durch Bremselemente (10) zurückgehalten wird.

2. Verfahren nach Anspruch 1, **dadurch gekennzeichnet, dass** es als halbkontinuierliches Verfahren durchgeführt wird; zunächst wird das Material bei seinem Durchlaufen durch den oder die Durchgänge mit verringertem Querschnitt der Kammer unter der Wirkung der Schubbewegung des Kolbens einer thermischen Verfestigung und einer Formgebung mit Erhöhung der Festigkeit zumindest im peripheren Bereich beim Durchgang durch den verringerten Querschnitt, der als Matrize wirkt, unterzogen, wonach der Kolben in seine Ausgangsposition zurückfährt (d.h. in die Einzugsposition), um die Zufuhr von zu verarbeitendem Material zu ermöglichen; danach beginnt eine neue Verdichtungsphase.

3. Verfahren nach Anspruch 1 oder 2, **dadurch gekennzeichnet, dass** man ein Produkt in Strangform erhält, das bei seinem Austritt aus dem oder den Durchgängen mit verringertem Querschnitt schnell gekühlt wird.

4. Verfahren nach Anspruch 3, **dadurch gekennzeichnet, dass** das Produkt nach seiner Abkühlung geschnitten und insbesondere in Stücke zerteilt wird.

5. Vorrichtung zur Umsetzung des Verfahrens nach einem der vorstehenden Ansprüche, bestehend aus einer Druckkammer, die von einem Gehäuse (6) gebildet wird, in dem sich ein Kolben (3) bewegt, und die am Ende einen oder mehrere Durchgänge mit verringertem Querschnitt aufweist, die eine Matrize (7) bilden und außen mit Heizelementen ausgestattet sind, und die Bremselemente (10) hat, die eine Rückhaltefunktion ausüben, wobei das Material im ersten Teil der Druckkammer im wesentlichen einer Druckbeanspruchung ausgesetzt wird und bei seinem Durchlauf durch die Durchgänge mit verringertem Querschnitt wenigstens im peripheren Bereich ausreichend erhitzt wird, wodurch die Verfestigung des Formprodukts gewährleistet wird, ohne dass ein vollständiges Schmelzen des Materials erforderlich wäre.

6. Vorrichtung nach Anspruch 5, **dadurch gekennzeichnet, dass** der Kolben (3) durch wenigstens eine feste Achse (5) geführt wird, die am Ende der besagten Kammer in einem beheizten Kern (8) endet, der mit dieser Achse eine Linie bildet, so dass das verarbeitete Material eine Verfestigungswirkung durch Erhöhung des Zusammenhalts in seinem Außenbereich sowie im Inneren der Masse erfährt, indem ein oder mehrere Kanäle mit verfestigter Wand im verarbeiteten Material erzeugt werden.

7. Vorrichtung nach Anspruch 5 oder 6, **dadurch gekennzeichnet, dass** zumindest im Bereich der Matrize von außen Mittel vorgesehen sind, die eine Erhitzung gewährleisten und somit zur Verfestigung des Formprodukts beitragen.

8. Vorrichtung nach einem der Ansprüche 5 bis 7, **dadurch gekennzeichnet, dass** die Verkleinerung der Druckkammer dadurch erreicht wird, dass ein als Matrize dienender Durchgang in Form eines Kegelstumpfs gebildet wird, dessen große Grundfläche zur Druckkammer zeigt.

9. Vorrichtung nach einem der Ansprüche 5 bis 8, **dadurch gekennzeichnet, dass** der als Matrize dienende Durchgang einen oder mehrere beheizte(n) Kern(e) aufweist.

10. Vorrichtung nach einem der Ansprüche 5 bis 9, **dadurch gekennzeichnet, dass** sie einen oder mehrere Zufuhrkanäle (1, 2) für das zu verarbeitende Material aufweist, die senkrecht zur Kolbenachse (3) angeordnet sind und den Einlauf der zu verarbeitenden Stoffe in das Gehäuse der Druckkammer ermöglichen.

11. Verwendung der in dem Verfahren nach einem der Ansprüche 1 bis 4 oder mit Hilfe einer Anlage nach einem der Ansprüche 5 bis 10 erhaltenen Produkte zur Kabelverlegung, insbesondere für Erdkabel, als Füllkörper auf Deckenträgern im Bauwesen oder als Schallschutzplatten oder Schallschutzwände, insbesondere für Autobahnen.
